# EUROPÄISCHE PATENTSCHRIFT

(11) **EP 1 120 072 B1**
(45) Veröffentlichungstag und Bekanntmachung des Hinweises auf die Patenterteilung: **13.11.2002**
(21) Anmeldenummer: 01101606.0
(22) Anmeldetag: 25.01.2001
(51) Int. Cl.: A47J 36/28

(54) **Einwegbehälter zur Erwärmung und Kühlung von Flüssigkeiten**
Disposable container for re-heating or cooling liquids
Conteneur jetable pour réchauffer ou refroidir des liquides

(30) Priorität: 27.01.2000 DE 10003534
(43) Veröffentlichungstag der Anmeldung: 01.08.2001
(73) Patentinhaber: Ebbecke, Reinhard, 30159 Hannover (DE); Fraunhofer-Gesellschaft zur Förderung der angewandten Forschung e.V., 80636 München (DE)
(72) Erfinder: Peters, Sascha, 52064 Aachen (DE); Schneider, Udo, 52072 Aachen (DE); Dressen, Vanessa, 52066 Aachen (DE); Seibert, Fabian, 52074 Aachen (DE)
(74) Vertreter: Motsch, Andreas

(56) Entgegenhaltungen:
- FR-A- 2 666 311
- US-A- 4 722 323
- US-A- 4 809 673
- PATENT ABSTRACTS OF JAPAN vol. 014, no. 037 (C-0680), 24. Januar 1990 (1990-01-24) & JP 01 274720 A (DAINIPPON PRINTING CO LTD), 2. November 1989 (1989-11-02)

## Beschreibung

Die Erfindung bezieht sich auf einen Einwegbehälter zur Selbsterwärmung oder -kühlung von Flüssigkeiten oder Feststoffen, der zwei durch eine innere Folie getrennte Räume, die mit Reagenzien befüllt sind, die beim Zusammenbringen eine exotherme oder endotherme Reaktion auslösen, ein Metallgefäß und eine Abreißfolie aufweist, wobei das Metallgefäß mit einem oberen Bauteil verkeilt, verklebt oder versiegelt ist.

Im Stand der Technik sind Einwegbehälter zur Selbsterwärmung von Flüssigkeiten oder Feststoffen bekannt. So wird beispielsweise in der EPB 0 255 494 ein selbstheizender Einwegbehälter für Flüssigkeiten und Feststoffe beschrieben (vgl. Oberbegriff des Anspruchs 1) mit einem äußeren Isoliermantel, einer innerhalb dieses Isoliermantels angeordneten Hülle, die in zwei durch eine Membran voneinander getrennten Abteilungen, und zwar eine obere Abteilung und eine untere Abteilung unterteilt ist; einem Gefäß für flüssige oder feste Stoffe, das mit der genannten Hülle verbunden und an seinem oberen Ende durch ein abreißbares Diaphragma geschlossen ist, und mit einem innerhalb der unteren Abteilung der Hülle angeordneten Durchbruchglied, das durch eine äußere Kraft das genannte Diaphragma durchzubrechen vermag, wobei die genannte Hülle aus einem Kunststoff besteht und vollständig an dem Mantel befestigt ist, das Gefäß ein Metallgefäß ist, das innerhalb der Kunststoffhülle angeordnet und an dem oberen Teil der Kunststoffhülle durch Verkeilung oder Schrumpfverbindung befestigt und an das Diaphragma angeschweißt ist, ein Deckelelement zum Verdichten und Schützen des selbstheizenden Behälters am oberen Teil desselben vorgesehen ist und ein flüssiges Reagenz in der unteren Abteilung und ein festes Reagenz in der oberen Abteilung der genannten Hülle, oder umgekehrt, enthalten sind.

Dieser komplizierte Aufbau macht den in der EP B 0 255 494 beschriebenen Behälter für geringwertige Güter als Wegwerfartikel jedoch weniger geeignet.

In der FR-A-2666311 wird ebenfalls ein Einwegbehälter beschrieben, der zur Selbsterwärmung und/oder -kühlung von Flüssigkeiten oder Feststoffen geeignet ist. Dieser Behälter, der aufgrund seiner vielen Bauteile komplex aufgebaut ist, ist deshalb für einen Einwegbehälter nur bedingt geeignet.

Es besteht jedoch ein Bedarf an Einwegbehältern zur Selbsterwärmung beispielsweise für Getränke, wie einen Espresso, auf Reisen. Diese Einwegbehälter richten sich an Interessenten, die einen schnellen und unkomplizierten Genuss für unterwegs suchen.

Die Aufgabe vorliegender Erfindung bestand daher darin, einen Einwegbehälter zur Selbsterwärmung oder -kühlung von Flüssigkeiten oder Feststoffen bereitzustellen, der gegenüber dem im Stand der Technik bekannten einfacher aufgebaut ist.

Die Aufgabe wird durch einen Einwegbehälter zur Selbsterwärmung oder -kühlung von Flüssigkeiten oder Feststoffen gelöst, der zwei durch eine innere Folie getrennte Räume, die mit Reagenzien befüllt sind, die beim Zusammenbringen eine exotherme oder endotherme Reaktion auslösen, ein Metallgefäß und eine Abreißfolie aufweist, wobei das Metallgefäß mit einem oberen Bauteil verkeilt, verklebt oder versiegelt ist, wobei der Behälter dadurch gekennzeichnet ist, dass das obere Bauteil zu einem unteren Bauteil mittels eines Gewindes drehbar angeordnet und die Folie durch diese Drehbewegung zerstörbar ist.

Mittels einer einfachen Drehbewegung wird die Folie im Inneren des Behälters durchtrennt, so dass durch die Reaktion der in den beiden Räumen befindlichen Reagenzien, beispielsweise der Espresso erwärmt wird, der nach Abziehen der Schutzfolie getrunken werden kann.

In einer bevorzugten Ausführungsform weist das untere Bauteil unterhalb der Folie eine oder mehrere Schneidkanten zum Durchtrennen der Folie auf. Besonderes bevorzugt sind hierbei vier auf den Gewinde angeordnete Schneidkanten.

Bevorzugt ist ferner ein Einwegbehälter, bei dem die Drehbewegung durch einen Rastmechanismus begrenzt ist. Das untere Bauteil kann über ein Gewinde um eine halbe Umdrehung gegenüber dem oberen Bauteil verdreht werden. Ein Rastmechanismus verhindert sowohl ein unbeabsichtigtes zu weites Eindrehen vor sowie ein unkontrolliertes Ausdrehen des unteren Bauteils nach Gebrauch.

Das Gewinde übernimmt hierbei keine Dichtwirkung. Es besteht aus zwei Fäden, die entlang einer Kreisbahn mit entsprechender Steigung am unteren Bauteil angeordnet sind. Die Dichtwirkung nach dem Verdrehen wird über eine Keilwirkung erreicht, indem sich das obere und das untere Bauteil ineinander verkeilen.

In einer besonders bevorzugten Ausführungsform ist der Einwegbehälter dadurch gekennzeichnet, dass das obere Bauteil oberhalb des Gewindes zusätzlich eine oder mehrere Dichtlippen aufweist. Diese verhindert den Luftaustausch zwischen der Umgebung und dem gegebenenfalls feuchtigkeitsempfindlichen Reagenz.

In einer weiteren speziellen Ausführungsform des Einwegbehalters wird der Spalt zwischen dem oberen Bauteil und dem unteren Bauteil von einer Lasche überdeckt. Die Lasche dient dazu, vor unbeabsichtigtem Verdrehen vor Gebrauch zu schützen. Sie kann zusätzlich rundum mit einer Kunststofffolie umklebt sein, um das feste Reagenz vor eintretender Feuchtigkeit zu schützen. Diese Folie kann zusätzlich zum Aufbringen von Werbung oder einer Gebrauchsanweisung genutzt werden.

Der Einwegbehälter kann an seinem unteren Bauteil senkrechte Rippen aufweisen. Diese dienen zur Versteifung.

Der obere Raum kann mit Wasser, der untere Raum mit Calciumoxid, wasserfreiem Calciumchlorid, Magnesiumoxid, Ammoniumnitrat, Ammoniumchlorid oder Natriumnitrat befüllt sein. Hierbei kann die Anordnung der Reagenzien in den Räumen auch umgekehrt sein. Die Reaktion von Wasser mit Calciumchlorid, Calciumoxid oder Magnesiumoxid führt zu einer exothermen Reaktion, die Reaktion von Ammoniumnitrat, Ammoniumchlorid und Natriumnitrat zu einer endothermen Reaktion. Calciumchlorid ist besonders feuchtigkeitsempfindlich. Die durch die exotherme Reaktion freiwerdende Wärme wird zur Erhitzung, die durch die endotherme Reaktion entstehende Kälte wird zur Kühlung der Flüssigkeit bzw. des Feststoffs im Metallgefäß genutzt.

Das obere und das untere Bauteil bestehen aus Polypropylen, wie z. B. Homopolypropylen, das Metallgefäß aus einem beidseitig mit Polypropylen beschichtetem tiefgezogenen Aluminiumblech. Diese Beschichtung auf der oberen Seite des Gefäßes ist aus Gründen der Lebensmitteltauglichkeit notwendig. Die Beschichtung auf der unteren Seite ist notwendig, weil das tiefgezogene Metallgefäß mit Hilfe eines Siegelprozesses mit dem oberen Kunststoffbauteil verbunden werden kann. Bei der inneren Folie handelt es sich ebenfalls um eine mit Polypropylen beschichtete Aluminiumfolie.

Am oberen Endes des oberen Bauteils befindet sich eine abreißbare, mit Kunststoff beschichtete Aluminiumfolie, die die Flüssigkeit oder den Feststoff vor dem Genuß vor Verschmutzung bzw. Verrottung schützt. Der untere Kunststoffbehälter dient nicht nur als Lagerung für das Reagenz sondern auch als Isolierung vor der im Innern entstehenden Wärme.

Zur einfachen Montage des Metallgefäßes am oberen Bauteil ist ein Rastmechanismus an diesem vorgesehen.

Die Erfindung wird nunmehr anhand der Zeichnung näher erläutert.

Figur 1 zeigt den erfindungsgemäßen Behälter im Schnitt.

Figur 2 zeigt das untere Bauteil des Behälters im Schnitt und schräger Draufsicht.

Figur 3 zeigt den unteren Teil des unteren Bauteils des Behälters in Seitenansicht.

Figur 4 zeigt das untere Bauteil des Behälters in schräger Draufsicht.

Figur 5 zeigt einen Ausschnitt des oberen Teils des oberen Bauteils in der Seitenansicht.

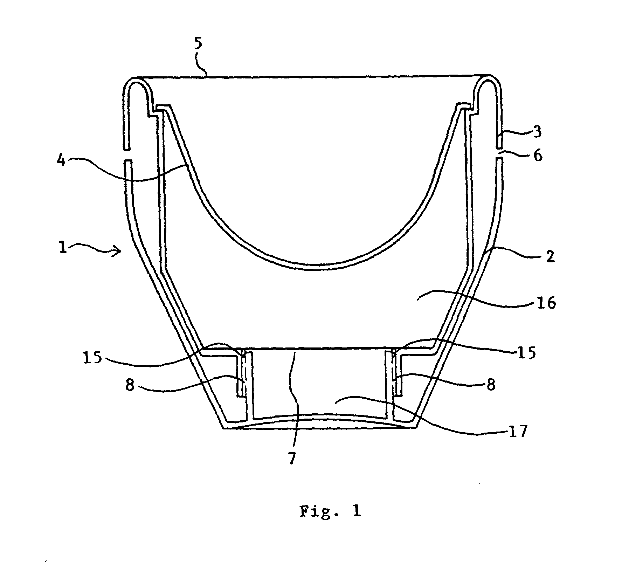

Figur 1 zeigt schematisch den grundsätzlichen Aufbau des Behälters 1, der ein unteres Bauteil 2 und ein oberes Bauteil 3 aufweist, die über ein Gewinde 8 verbunden sind. In dem oberen Bauteil 3 sitzt das Metallgefäß 4. Die innere Folie 7 erzeugt einen oberen Raum 16 und einen unteren Raum 17 zur Aufnahme der Reagenzien. Das obere Bauteil 3 wird von einer Abreißfolie 5 überspannt. Zwischen dem oberen Bauteil 3 und dem unteren Bauteil 2 befindet sich der Spalt 6, der von einer Lasche als Frischesiegel umspannt sein kann. Oberhalb des Gewindes 8 befindet sich in einer bevorzugten Ausführungsform eine ringförmige Dichtlippe 15.

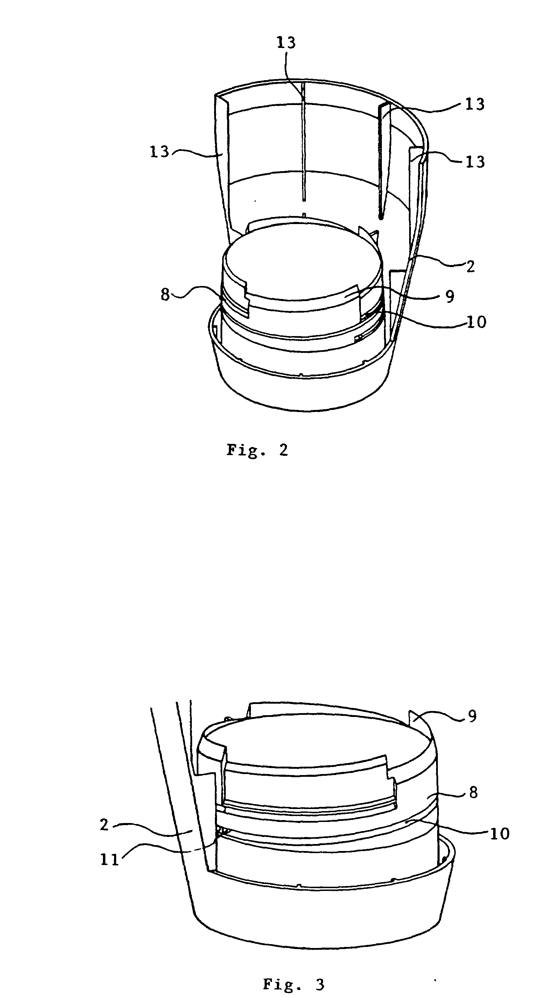

Figur 2 zeigt mehrere Rippen 13 zur Versteifung des unteren Bauteils 2. Ferner zeigt die Figur 2 den umlaufenden Faden 10 des Gewindes 8 sowie vier Schneidkanten 9 zur Durchtrennung der inneren Folie 7.

In der Figur 3 ist zusätzlich die Vertiefung 11 dargestellt, die zum Einrasten eines Gegenstücks dient, damit die Drehbewegung der beiden Bauteile (2, 3) gegeneinander begrenzt wird.

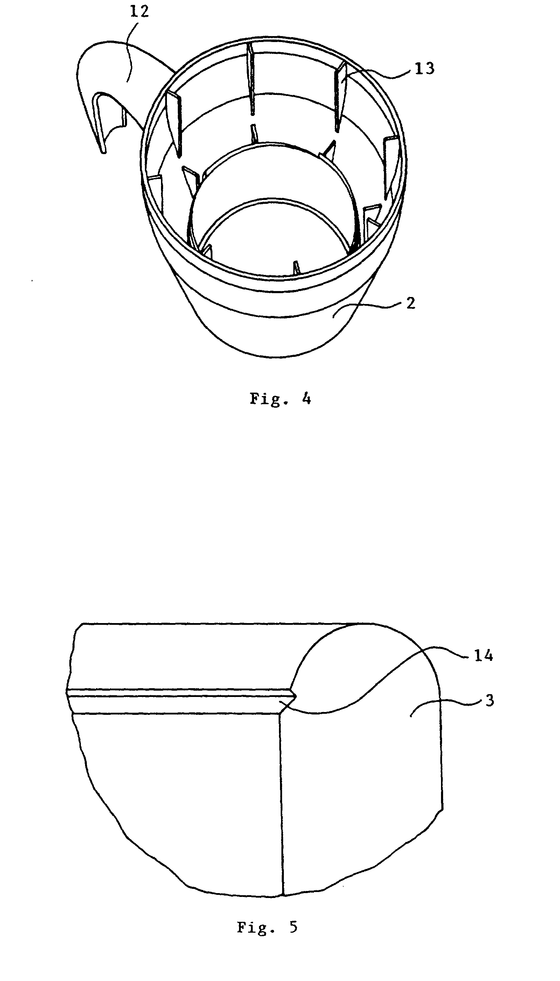

Die Figur 4 zeigt die Versteifung des unteren Bauteils durch die Rippen 13. Ebenfalls am unteren Bauteil kann sich ein Henkel 12 befinden. Durch diesen lässt sich beispielsweise der Espresso leichter trinken und er isoliert gleichzeitig vor dem warmen Bereich des Behälters 1.

Figur 5 zeigt das obere Bauteil 3 mit der Ausnehmung 14, in der in einfacher Weise das Metallgefäß 4 verrastet werden kann. Durch diese Verrastung wird das Metallgefäß 4 während des Siegelprozesses festgehalten. Nach der Versiegelung sitzt das Metallgefäß 4 auch bei einem möglichen Druckanstieg in dem darunterliegenden Raum 16 fest im oberem Bauteil 3.

### Bezugszeichenliste

- 1: Behälter
- 2: unteres Bauteil
- 3: oberes Bauteil
- 4: Metallgefäß
- 5: Abreißfolie
- 6: Spalt
- 7: innere Folie
- 8: Gewinde
- 9: Schneidkante
- 10: Faden
- 11: Vertiefung
- 12: Henkel
- 13: Rippe
- 14: Ausnehmung
- 15: Dichtlippe
- 16: oberer Raum
- 17: unterer Raum

## Patentansprüche

1. Einwegbehälter zur Selbsterwärmung oder -kühlung von Flüssigkeiten oder Feststoffen, der zwei durch eine innere Folie getrennte Räume, die mit Reagenzien befüllt sind, die beim Zusammenbringen eine exotherme oder endotherme Reaktion auslösen, ein Metallgefäß und eine Abreißfolie aufweist, wobei das Metallgefäß mit einem oberen Bauteil verkeilt, verklebt oder versiegelt ist, **dadurch gekennzeichnet, dass** das obere Bauteil (3) zu einem unteren Bauteil (2) mittels eines Gewindes (8) drehbar angeordnet und die Folie (7) durch diese Drehbewegung zerstörbar ist.

2. Einwegbehälter nach Anspruch 1, **dadurch gekennzeichnet, dass** das untere Bauteil (2) unterhalb der Folie (7) eine oder mehrere Schneidkanten (9) aufweist.

3. Einwegbehälter nach Anspruch 1 oder 2, **dadurch gekennzeichnet, dass** die Drehbewegung durch einen Rastmechanismus begrenzt ist.

4. Einwegbehälter nach einem der vorhergehenden Ansprüche, **dadurch gekennzeichnet, dass** das obere Bauteil (3) oberhalb des Gewindes (8) eine oder mehrere Dichtlippen (15) aufweist.

5. Einwegbehälter nach einem der vorhergehenden Ansprüche, **dadurch gekennzeichnet, dass** ein Spalt (6) zwischen dem oberem Bauteil (3) und dem unteren Bauteil (2) von einer Lasche überdeckt ist.

6. Einwegbehälter nach einem der vorhergehenden Ansprüche, **dadurch gekennzeichnet, dass** das untere Bauteil (2) senkrechte Rippen aufweist.

7. Einwegbehälter nach einem der vorhergehenden Ansprüche, **dadurch gekennzeichnet, dass** ein Raum mit Wasser, der andere Raum mit Calciumoxid, wasserfreiem Calciumchlorid, Magnesiumoxid, Ammoniumnitrat, Ammoniumchlorid oder Natriumnitrat befüllt ist.

## Claims

1. Throw-away container for self-heating or self-cooling of liquids or solid matters consisting of two by an internal foil separated spaces filled with reagents, which, when brought into contact, initiate an exothermic or endothermic reaction, a metal vessel and a tear-off foil, said metal vessel being wedged, glued or sealed to an upper component **characterized in that** the upper component (3) is via a thread (8) arranged rotatably in relation to a lower component (2) and that the foil (7) is destructible by this rotational motion.

2. Throw-away container according to claim 1, **characterized in that** the lower component (2) below the foil (7) shows one or more cutting edges (9).

3. Throw-away container according to claim 1 or 2, **characterized in that** the rotational-motion is limited by a locking device.

4. Throw-away container according to one of he preceding claims, **characterized in that** the upper component (3) above the thread (8) shows one or more sealing lips (15).

5. Throw-away container according to one of the preceding claims **characterized in that** a gap (6) between the upper component (3) and the lower component (2) is covered by a strap.

6. Throw-away container according to one of the preceding claims, **characterized in that** the lower component (2) shows vertical ribs.

7. Throw-away container according to one of the preceding claims, **characterized in that** one space is filled with water, the other space with calcium oxide, water-free calcium chloride, magnesium oxide, ammonium nitrate, ammonium chloride or sodium nitrate.

## Revendications

1. Conteneur à usage unique pour l'autoréchauffement ou l'autorefroidissement de liquides ou solides qui présente deux espaces, séparés par une feuille intérieure, qui sont remplis avec des réactifs qui déclenchent, lors de leur réunion, une réaction exothermique ou endothermique, un récipient métallique et une feuille à arracher, le récipient métallique étant calé, collé ou scellé avec un composant supérieur, **caractérisé en ce que** le composant supérieur (3) est placé rotatif par rapport à un composant inférieur (2) au moyen d'un filet (8) et que la feuille (7) peut être détruite par ce mouvement de rotation.

2. Conteneur à usage unique selon la revendication 1, **caractérisé en ce que** le composant inférieur (2) présente, au-dessous de la feuille (7), une ou plusieurs arêtes de coupe (9).

3. Conteneur à usage unique selon la revendication 1 ou 2, **caractérisé en ce que** le mouvement de rotation est limité par un mécanisme d'arrêt.

4. Conteneur à usage unique selon l'une des revendications précédentes, **caractérisé en ce que** le composant supérieur (3) présente, au-dessus du filet (8), une ou plusieurs lèvres d'étanchéité (15).

5. Conteneur à usage unique selon l'une des revendications précédentes, **caractérisé en ce qu'**une fente (6) entre le composant supérieur (3) et le composant inférieur (2) est recouverte par une languette.

6. Conteneur à usage unique selon l'une des revendications précédentes, **caractérisé en ce que** le composant inférieur (2) présente des nervures verticales.

7. Conteneur à usage unique selon l'une des revendications précédentes, **caractérisé en ce qu'**un espace est rempli d'eau, l'autre espace est rempli d'oxyde de calcium, de chlorure de calcium sans eau, d'oxyde de magnésium, de nitrate d'ammoniaque, de chlorure d'ammoniaque ou de nitrate de sodium.
